# EUROPEAN PATENT SPECIFICATION

(11) **EP 3 766 152 B1**
(45) Date of publication and mention of the grant of the patent: **16.03.2022**
(21) Application number: 19711673.4
(22) Date of filing: 06.03.2019
(51) Int. Cl.: F16L 1/20, H02G 1/10, H02G 1/08

(54) **PULL HEAD CONNECTOR**
ZUGKOPFVERBINDER
CONNECTEUR DE TÊTE DE TIRAGE

(30) Priority: 12.03.2018 GB 201803890
(43) Date of publication of application: 20.01.2021
(73) Proprietor: First Subsea Limited, Lancaster LA1 5QP (GB)
(72) Inventor: LITTLE, Anthony John, Lancaster, Lancashire 6DD (GB); BARNETT, Jonathan Paul, Caton LA2 9QD (GB)
(74) Representative: McKinnon, Alistair James
(86) International application number: PCT/GB2019/050632
(87) International publication number: WO 2019/175547

(56) References cited:
- WO-A1-2017/068343
- WO-A1-2017/093725
- Balltec Engineered Solutions: "Balltec BendLOK Diverless Bend Stiffener Connector", Youtube, 13 April 2015 (2015-04-13), page 1 pp., XP054979335, Retrieved from the Internet: URL:https://www.youtube.com/watch?v=lH0SeA bzMBM [retrieved on 2019-04-25]

## Description

The present invention relates to pull heads for installing an elongate flexible member through an aperture of a subsea structure.

In offshore energy applications, is often necessary to secure an elongate flexible member, such as a pipe or electrical cable, to an offshore installation. This is often achieved by securing one end of the elongate flexible member into a so-called J-tube or I-tube mounted on the structure.

In some circumstances, however, the elongate flexible member must pass through an aperture in the wall of the structure to which it is to be connected. A typical example of this would be where an electrical cable passes through the wall of a monopile mounted on the seabed, which forms the body of an offshore wind turbine. In such circumstances, it is necessary for the cable to be pulled through aperture in the wall of the monopile without causing damage to the monopile or the cable itself.

In existing installations, the elongate flexible member typically passes through a mounting device which is configured to engage with, and be secured in, an aperture in a wall of the structure. In general, such mounting devices are configured to pass through the aperture and to lock in position, to inhibit further motion of the mounting device in both the forward and backward directions. The mounting device is provided with an internal elongate passageway through which the elongate flexible member (e.g. the cable) passes.

In use, the mounting device is loaded onto a cable-laying vessel and fitted around one end of a cable to be protected and is discharged over the side of the vessel into the water towards a support pillar of a turbine. This is achieved in the conventional manner by means of a pulling line extending from the support pillar which is secured to an eye of a connector member which is embedded into the front end of the mounting device. The pulling line is also connected to the end of the cable to be laid and the connector member is provided with a weak link (sometimes referred to as a "break bolt"), designed to break on application of a predetermined tension, so that when the mounting device is retained in the aperture of the wall of the support pillar, further pulling of the pulling line causes the weak link to fracture and will continue to pull the cable through the mounting device.

An example of this is disclosed in GB 2536075A, which discloses a mounting device having a series of spring-loaded balls which project from the surface of the mounting device and which, when the mounting device is pulled through the aperture in the support structure, securely retain the mounting device in position.

Prior art document WO 2017/068343 A1 discloses an elongate connector for subsea connection of cables and the like to wind turbine generators has a plurality of locking elements arranged on ramp surfaces and held in a plurality of cages on the connector. The cages are moveable to move the locking elements along the ramp surfaces between an engaged position and a disengaged position and the plurality of cages are moveable independently of each other. A release collar is provided, which can move all the cages simultaneously to the disengaged position, in order to allow removal of the connector.

The existing arrangements suffer from a number of disadvantages.

Firstly, the load required to break the weak link will depend on the angle at which the cable or other elongate flexible member is pulled, and it is therefore difficult to design the weak link to break at the desired tension. This problem can be reduced by providing a centraliser on the front end of the mounting device, but this increases the weight of the installation and the cost of manufacture and installation.

Secondly, several different sizes of mounting device are commonly used, requiring the appropriate weak link to be chosen, depending on the circumstances.

In accordance with the first aspect of the present invention, there is a pull head connector in combination with a mounting device for an elongate flexible member, the pull head connector comprising:
an outer housing having a tubular portion and a longitudinal axis;
an attachment member comprising a body portion mounted in the outer housing and being displaceable along the longitudinal axis, first attachment means at a first end of the body portion for attachment to one end of a pull cable and second attachment means at a second end for attachment to one end of an elongate flexible member;
the tubular portion of the outer housing comprising a plurality of through apertures, in each of which an engagement member is mounted, the apertures and the engagement members being configured to allow the engagement members to project partially beyond the tubular outer surface but to prevent them from passing through the apertures;
the outer surface of the body portion of the attachment member comprising a plurality of recesses, each recess corresponding to a respective one of the apertures in the outer housing; and
the attachment member being displaceable with respect to the outer housing between a first position in which the engagement members engage the attachment member and are displaced outwardly to project partially beyond the outer tubular surface of the outer housing and the second position in which the apertures are aligned with the recesses in the attachment member to allow the engagement members to be received in the recesses and to move radially inwardly;
the connector further comprising biasing means which bias the attachment member towards the first position;
the mounting device comprising an elongate through passage having a recess for releasable receipt of the engagement members of the pull head connector.

The pull head connector therefore comprises two relatively movable portions, and biasing means which bias the two relatively movable portions towards a relative position in which the engagement members are displaced outwardly. In use, the engagement members are received in a complementarily-shaped recess in the inner tubular face of the longitudinal passage of a mounting device, which secures the pull head connector to the mounting device, so that they normally move together.

In use, one end of a pull cable is secured to the first attachment means at the front end of the pull head connector and one end of a cable or other elongate flexible member is secured to the second attachment means at the rear end of the pull head connector. As the pull cable is winched in, the pull head connector and the mounting device are pulled through the aperture in the wall of the structure through which the elongate flexible member (e.g. the cable) is to pass.

The mounting device is configured to be secured in the aperture so that it is no longer able to move. At this point, the pull head connector is locked to the mounting device, but continued application of tension to the pull cable causes the attachment member to be displaced forwardly relative to its outer housing, against the restoring force of the biasing means, which aligns the recesses in the attachment member with the apertures in the outer housing. This in turn allows the engagement members to be displaced radially inwardly, thereby disengaging the engagement members from the recess in the mounting device, which in turn disengages the pull head connector from the mounting device. Continued application of tension to the pull cable causes the pull head connector and the elongate flexible member (e.g. the cable) to be winched onto the structure.

In contrast to the prior art arrangements, there is no weak link or break bolt to be severed in order to separate the pull head connector from the mounting device once the mounting device is secured in the aperture in the structure.

The use of biasing means allows the tension at which the pull head connector disengages from the mounting device to be determined much more accurately and it is also much less dependent on the angle at which the tension of the pull cable is applied.

The engagement members may conveniently comprise balls.

Preferably, a first, outer end of each aperture has a diameter smaller than the diameter of the balls.

The biasing means preferably comprises a plurality of spring means.

For example, the biasing means may comprise a plurality of gas springs extending between the outer housing and the attachment member. In one arrangement, the cylinders of the gas springs are mounted in corresponding recesses in the outer housing and the pistons of the gas springs are secured to the attachment member.

The cylinders of the gas springs may be aligned with the longitudinal axis of the outer housing.

The recesses in the outer surface of the body portion of the attachment member are preferably elongate.

The recesses in the outer surface of the body portion of the attachment member preferably comprise a portion inclined to the longitudinal axis. Preferably, the attachment members are receivable into the recesses so that they do not project beyond the outer surface of the outer housing.

The present invention also includes a pull head connector in accordance with the present invention, in combination with a mounting device for an elongate flexible member, the mounting device comprising an elongate through passage having a recess for releasable receipt of the engagement members of the pull head connector.

By way of example only, a specific embodiment of the present invention will now be described with reference to the accompanying drawings, in which:
Figure 1a is a side view of an embodiment of pull head connector in accordance with the present invention, shown disposed within, and engaged with, a mounting device for an elongate flexible member such as a pipe, cable or the like;
Figure 1b is a side view of the pull head connector of Figure 1a, in which the pull head connector is disengaged from the mounting device;
Figure 2a is a side view of the pull head connector of Figure 1, shown in an engaged configuration;
Figure 2b is a side view of the pull head connector of Figure 1, shown in a disengaged configuration;
Figure 3a is a front perspective view of the pull head connector of Figure 1, shown in an engaged condition;
Figure 3b is a rear perspective view of the pull head connector of Figure 1, shown in an engaged condition;
Figure 3c is a rear perspective view of the pull head connector of Figure 1, shown in a disengaged configuration;
Figure 4a is a longitudinal cross-sectional view of the pull head connector of Figure 1, looking in the direction of arrows A - A, in an engaged configuration; and
Figure 4b is a longitudinal cross-sectional view of the pull head connector of Figure 1, looking in the direction of arrows A - A, in a disengaged configuration.

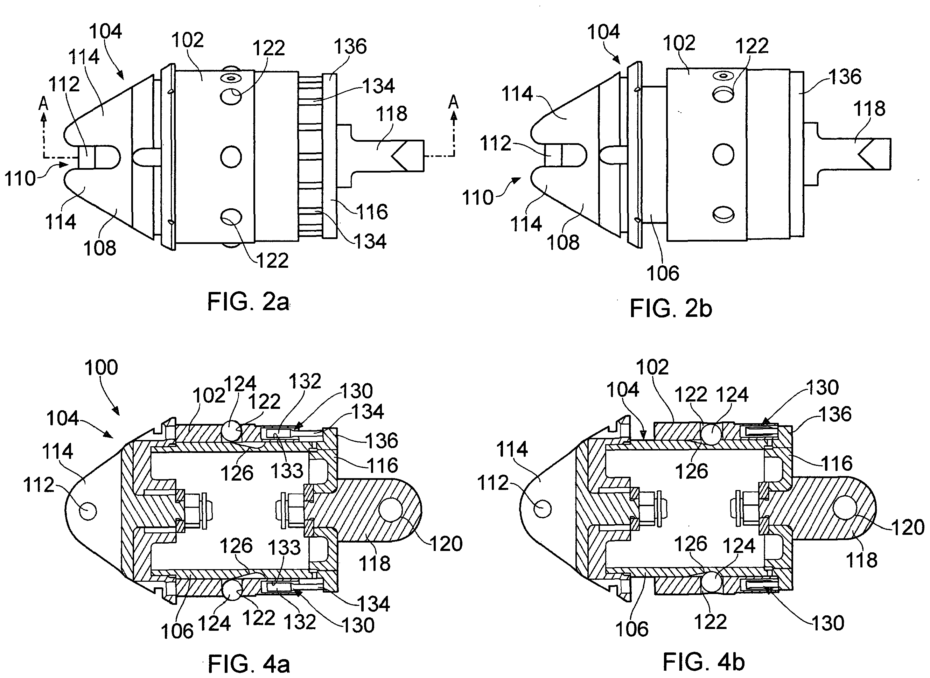

The pull head connector 100 comprises an outer housing in the form of an outer cylindrical sleeve 102 having a longitudinal axis X - X, within which an attachment member in the form of a pull head 104 is slidably mounted and is displaceable along the longitudinal axis. As best seen in Figures 4a and 4b, the pull head 104 comprises a tubular cylindrical body 106 whose external diameter is the same as the internal diameter of the outer cylindrical sleeve 102. A generally frusto-conical securing head 108 is attached to a first, front end of the cylindrical body 106 and is formed into a clevis bracket 110, with a threaded clevis bolt 112 extending between the two clevis wings 114 and being threadedly received in one of the wings.

A circular mounting disc 116 is secured at the second, rear end of the cylindrical body 106 and carries a rearwardly-projecting attachment lug 118 having a through aperture 120.

The outer cylindrical sleeve 102 is provided with eight identical radially extending apertures 122 approximately halfway along its length and equally angularly spaced around the periphery. The apertures are not of constant width, but instead taper from the inner face to the outer face of the sleeve 102. Each of the apertures 122 receives a ball 124, and the radially outermost end of the apertures have a diameter smaller than the diameter of the balls 124 so that the balls can project partially through the apertures beyond the outer face of the outer cylindrical sleeve 102 but can also move radially inwardly, as will be explained, so that they do not project beyond the outer face of the sleeve 102.

As best seen in Figures 4a and 4b, the outer face of the tubular cylindrical body 106 is provided with eight identical elongate ramped recesses 126 located approximately halfway along its length and equally angularly spaced around the periphery. Each of the recesses 126 is inclined downwardly from a front end, and the rear end of each recess 106 is formed into a part-spherical portion having the same radius of curvature as the balls 124.

By displacing the tubular cylindrical body 106 of the pull head 104 with respect to the outer cylindrical sleeve 102, as will be explained, the relative positions of the apertures 122 in the outer cylindrical sleeve 102 and the elongate recesses 126 in the outer face of the tubular cylindrical body 106 can be varied, from a first extreme position shown in Figure 4a in which the balls 124 are not received in their corresponding recesses 126, and a second extreme position shown in Figure 4b in which the balls have travelled along their associated recesses 126 and are received in the part-spherical rear end portion. In the first extreme position, the balls 124 are in engagement with the outer cylindrical surface of the cylindrical body 106 and are therefore forced radially outwardly so that they partially project beyond the outer face of the outer cylindrical sleeve 102. In the second extreme position the balls 124 are allowed to travel along the ramped recesses 126 into the part-spherical rear end portion and can therefore move radially inwardly, so that they do not project beyond the outer face of the outer cylindrical sleeve 102.

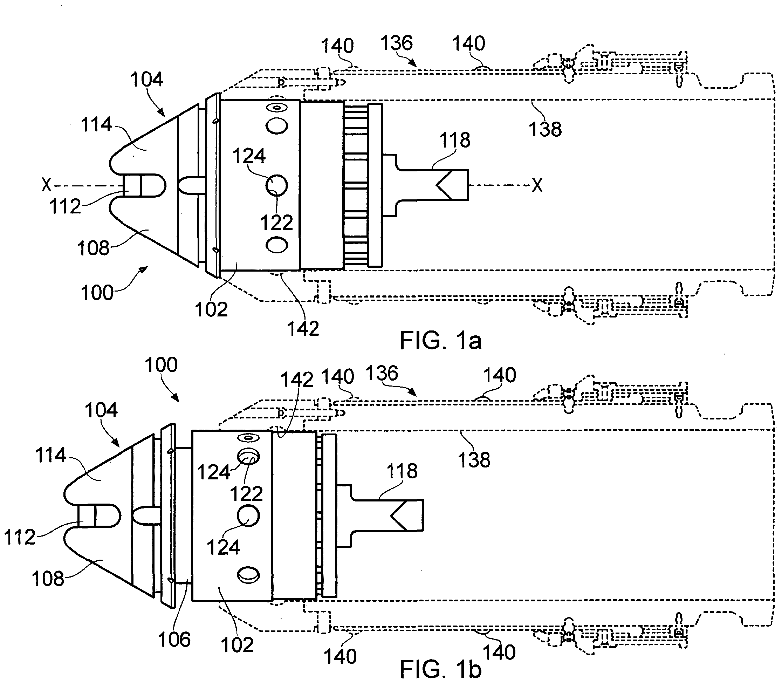

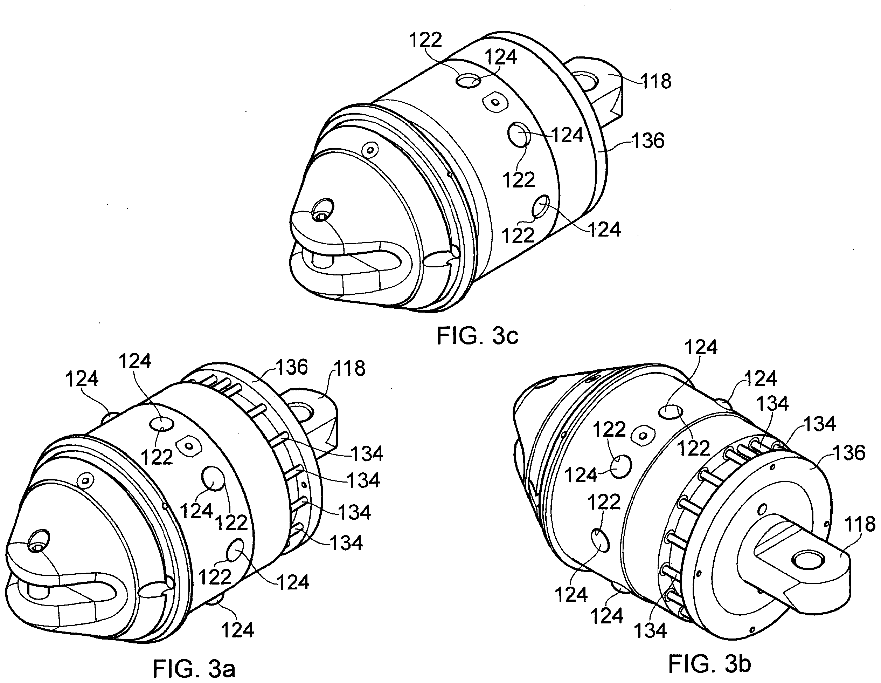

The pull head connector 100 is biased into the position shown in Figures 1a, 2a, 3a, 3b and 4a, in which the balls 124 project beyond the outer face of the cylindrical sleeve 102 by means of twelve identical gas springs 130 (although that number can be varied, depending on the circumstances), each having a cylinder 132 mounted in an elongate recess 133 in the rearmost annular end face of the cylindrical sleeve 102 and a piston 134 connected to a radially extending flange 136 at the rear end of the tubular cylindrical body 106.

The combined force applied by the gas springs 130 biases the frusto-conical head 108 rearwardly into engagement with the front annular end face of the cylindrical sleeve 102, as shown in Figure 4a, in which configuration the balls 124 are not engaged with their corresponding recesses 126, and so are forced to project outwardly beyond the outer surface of the outer cylindrical sleeve 102.

By overcoming the force applied by the gas springs 130, the pull head 104 is displaced longitudinally with respect to the outer cylindrical sleeve 102 and, as shown in Figure 4b, allows the balls 124 to be received in the respective recesses 126, thereby allowing the balls 124 to move radially inwardly so that they do not project beyond the outer face of the outer cylindrical sleeve 102.

In use, the pull head connector 100 is mounted into the longitudinally front end of a mounting device 136 for an elongate member (e.g. a pipe or cable), such as that disclosed in GB 2536075A, which has an internal elongate passageway 138 for receipt of the elongate flexible member. The mounting device 136 is provided with front and rear rows of radially-displaceable balls 140 mounted equally around its circumference, by means of which the mounting device 136 can be secured in an aperture in the wall of a structure such as a monopile mounted on the seabed, which forms the body of an offshore wind turbine, but that does not form part of the present invention.

The inner wall of the mounting device 136 is provided with a circumferential recess 142, having a part-circular cross-section of the same radius of curvature as the balls 124, near its front end, which receives the balls 124 of the pull head connector 100 and thereby retains the pull head connector 100 in position at the front end of the mounting device 136.

One end of the elongate member (e.g. the pipe or cable) is secured to the rearwardly-projecting lug 118 of the pull head connector 100 by means of cables or other suitable attachments. In addition, one end of a pulling cable is attached to the clevis bolt 112, the pulling cable being attached to a winch which is typically mounted on the structure to which the elongate flexible member is to be attached.

The mounting device 136, including the pull head connector 100 mounted at its front end, is then pulled through the aperture (not illustrated) in the wall of the structure (e.g. a monopile) in which it is to be secured, by pulling the cable attached to the clevis bolt 112. As the mounting device 136 passes into the aperture, it becomes secured in the aperture. Initially, the pull head connector 100 is retained in position at the front end of the mounting device 136, but the force applied to the pulling cable tends to draw the pull head 104 forwardly, out of the tubular cylindrical body 106, against the restoring force of the gas springs 130. As force continues to be applied to the pulling cable, that force ultimately overcomes the restoring force of the gas springs 130. This results in the alignment of the apertures in the sleeve with the recesses 126 in the body 106 of the pull head, which allows the balls 124 to move radially inwardly along the inclined recesses 126, thereby disengaging the balls 124 from the circumferential recess 142 in the inner wall of the mounting device 136, as shown in Figure 4b. In this position, as explained previously, the balls 124 are no longer forced to project outwardly beyond the outer face of the cylindrical sleeve 102 (in which position they are received in the circumferential recess 142 in the inner wall of the mounting device 136), thereby disengaging the balls 124 from the circumferential recess 142 and allowing the pull head connector 100 to be pulled out of the end of the mounting device 136.

As the pulling cable attached to the clevis bolt 112 continues to be pulled, the elongate member (e.g. pipe or cable) attached to the opposite end of the pull head connector 100 by means of the rearwardly-projecting lug 118 is pulled through the internal elongate passageway of the mounting device 136, the mounting device 136 being secured in the aperture in the wall of the structure (e.g. a monopile) through which it projects.

By using several gas springs to react against the pull load, there is less variation in the release under different angles of pull (compared with a break-bolt system). The release load is independent of orientation and there is no need for a centraliser to align the pulling force direction, which is required with a break-bolt system. In addition, the invention is more scalable for use with different diameters of mounting device and it is possible to accurately and precisely adjust the release load.

The invention is not restricted to the details of the foregoing embodiment. For example, the number of springs 130 can be varied, depending on the circumstances. It is envisaged that typically 8 to 30 springs might be used, but that range is not limiting. Moreover, the springs 130 need not be identical.

## Claims

1. A pull head connector (100) in combination with a mounting device for an elongate flexible member, the pull head connector comprising:
an outer housing (102) having a tubular portion and a longitudinal axis;
an attachment member (104) comprising a body portion (106) mounted in the outer housing (102) and being displaceable along the longitudinal axis, first attachment means (108) at a first end of the body portion (106) for attachment to one end of a pull cable and second attachment means (116) at a second end for attachment to one end of an elongate flexible member;
the tubular portion of the outer housing (102) comprising a plurality of through apertures (122), in each of which an engagement member (124) is mounted, the apertures (122) and the engagement members (124) being configured to allow the engagement members (124) to project partially beyond the tubular outer surface but to prevent them from passing through the apertures (122);
the outer surface of the body portion of the attachment member comprising a plurality of recesses (126), each recess (126) corresponding to a respective one of the apertures (122) in the outer housing (102); and
the attachment member (104) being displaceable with respect to the outer housing (102) between a first position in which the engagement members (124) engage the attachment member (104) and are displaced outwardly to project partially beyond the outer tubular surface of the outer housing (102) and the second position in which the apertures (122) are aligned with the recesses (126) in the attachment member (104) to allow the engagement members (124) to be received in the recesses (126) and to move radially inwardly;
the connector (100) further comprising biasing means (130) which bias the attachment member (104) towards the first position;
the mounting device (136) comprising an elongate through passage having a recess for releasable receipt of the engagement members (124) of the pull head connector (100).

2. A pull head connector (100) as claimed in claim 1, wherein the engagement members (124) comprise balls.

3. A pull head connector (100) as claimed in claim 2, wherein a first, outer end of each aperture (122) has a diameter smaller than the diameter of the balls.

4. A pull head connector (100) as claimed in any of the preceding claims, wherein the biasing means (130) comprises a plurality of spring means.

5. A pull head connector (100) as claimed in claim 4, wherein the biasing means (130) comprise a plurality of gas springs extending between the outer housing (102) and the attachment member (104).

6. A pull head connector (100) as claimed in claim 5, wherein the cylinders of the gas springs are mounted in corresponding recesses (133) in the outer housing (102) and the pistons of the gas springs are secured to the attachment member (104).

7. A pull head connector (100) as claimed in claim 6, wherein the cylinders of the gas springs are aligned with the longitudinal axis of the outer housing (102).

8. A pull head connector (100) as claimed in any of the preceding claims, wherein the recesses (126) in the outer surface of the body portion of the attachment member (102) are elongate.

9. A pull head connector (100) as claimed in any of the preceding claims, wherein the recesses (126) in the outer surface of the body portion of the attachment member (102) comprise a portion inclined to the longitudinal axis.

10. A pull head connector (100) as claimed in any of the preceding claims, wherein the engagement members (124) are receivable into the recesses (126) so that they do not project beyond the outer surface of the outer housing (102).

## Patentansprüche

1. Zugkopfverbinder (100) in Kombination mit einer Montagevorrichtung für ein langgestrecktes biegsames Element, wobei der Zugkopfverbinder Folgendes umfasst:
ein äußeres Gehäuse (102) mit einem röhrenförmigen Abschnitt und einer Längsachse;
ein Befestigungselement (104), das Folgendes umfasst: einen Körperabschnitt (106), der in dem äußeren Gehäuse (102) montiert ist und entlang der Längsachse verschiebbar ist, ein erstes Befestigungsmittel (108) an einem ersten Ende des Körperabschnitts (106) zur Befestigung an einem Ende eines Zugdrahtseils und ein zweites Befestigungsmittel (116) an einem zweiten Ende zur Befestigung an einem Ende eines langgestreckten biegsamen Elements;
wobei der röhrenförmige Abschnitt des äußeren Gehäuses (102) eine Vielzahl von Durchgangslöchern (122) umfasst, in denen jeweils ein Eingriffselement (124) montiert ist, wobei die Löcher (122) und die Eingriffselemente (124) dazu konfiguriert sind, zu ermöglichen, dass die Eingriffselementen (124) teilweise über die röhrenförmige äußere Oberfläche vorstehen, aber zu verhindern, dass sie durch die Löcher (122) hindurchgelangen;
wobei die äußere Oberfläche des Körperabschnitts des Befestigungselements eine Vielzahl von Aussparungen (126) umfasst, wobei jede Aussparung (126) einem jeweiligen der Löcher (122) in dem äußeren Gehäuse (102) entspricht; und
wobei das Befestigungselement (104) bezogen auf das äußere Gehäuse (102) zwischen einer ersten Stellung, in der sich die Eingriffselemente (124) mit dem Befestigungselement (104) im Eingriff befinden und nach außen verschoben sind, um teilweise über die äußere röhrenförmige Oberfläche des äußeren Gehäuses (102) vorzustehen, und der zweiten Stellung, in der sich die Öffnungen (122) mit den Aussparungen (126) in dem Befestigungselement decken, um zu ermöglichen, dass die Eingriffselemente (124) in den Aussparungen (126) aufgenommen werden und sich radial nach innen bewegen, verschiebbar ist;
wobei der Verbinder (100) ferner Spannmittel (130) umfasst, die das Befestigungselement (104) in Richtung der ersten Stellung spannen;
wobei die Montagevorrichtung (136) einen langgestreckten Durchgang mit einer Aussparung zur lösbaren Aufnahme der Eingriffselemente (124) des Zugkopfverbinders (100) umfasst.

2. Zugkopfverbinder (100) nach Anspruch 1, wobei die Eingriffselemente (124) Kugeln umfassen.

3. Zugkopfverbinder (100) nach Anspruch 2, wobei ein erstes, äußeres Ende jedes Lochs (122) einen Durchmesser aufweist, der kleiner als der Durchmesser der Kugeln ist.

4. Zugkopfverbinder (100) nach einem der vorangehenden Ansprüche, wobei das Spannmittel (130) eine Vielzahl von Federmitteln umfasst.

5. Zugkopfverbinder (100) nach Anspruch 4, wobei die Spannmittel (130) eine Vielzahl von Gasfedern umfassen, die sich zwischen dem äußeren Gehäuse (102) und dem Befestigungselement (104) erstrecken.

6. Zugkopfverbinder (100) nach Anspruch 5, wobei die Zylinder der Gasfedern in entsprechenden Aussparungen (133) in dem äußeren Gehäuse (102) montiert sind und die Kolben der Gasfedern an dem Befestigungselement (104) fixiert sind.

7. Zugkopfverbinder (100) nach Anspruch 6, wobei die Zylinder der Gasfedern auf die Längsachse des äußeren Gehäuses (102) ausgerichtet sind.

8. Zugkopfverbinder (100) nach einem der vorangehenden Ansprüche, wobei die Aussparungen (126) in der äußeren Oberfläche des Körperabschnitts des Befestigungselements (102) langgestreckt sind.

9. Zugkopfverbinder (100) nach einem der vorangehenden Ansprüche, wobei die Aussparungen (126) in der äußeren Oberfläche des Körperabschnitts des Befestigungselements (102) einen Abschnitt umfassen, der gegenüber der Längsachse geneigt ist.

10. Zugkopfverbinder (100) nach einem der vorangehenden Ansprüche, wobei die Eingriffselemente (124) derart in den Aussparungen (126) aufgenommen werden können, dass sie nicht über die äußere Oberfläche des äußeren Gehäuses (102) vorstehen.

## Revendications

1. Raccord de tête de traction (100) en combinaison avec un dispositif de montage pour un élément flexible allongé, le raccord de tête de traction comportant :
un logement extérieur (102) ayant une partie tubulaire et un axe longitudinal ;
un élément de fixation (104) comportant une partie formant corps (106) montée dans le logement extérieur (102) et étant en mesure de se déplacer le long de l'axe longitudinal, un premier moyen de fixation (108) au niveau d'une première extrémité de la partie formant corps (106) servant à des fins de fixation sur une extrémité d'un câble de traction et un deuxième moyen de fixation (116) au niveau d'une deuxième extrémité servant à des fins de fixation sur une extrémité d'un élément flexible allongé ;
la partie tubulaire du logement extérieur (102) comportant une pluralité d'ouvertures traversantes (122), dans chacune desquelles un élément de mise en prise (124) est monté, les ouvertures (122) et les éléments de mise en prise (124) étant configurés pour permettre aux éléments de mise en prise (124) de faire partiellement saillie au-delà de la surface extérieure tubulaire mais pour les empêcher de passer au travers des ouvertures (122) ;
la surface extérieure de la partie formant corps de l'élément de fixation comportant une pluralité d'évidements (126), chaque évidement (126) correspondant à une ouverture respective des ouvertures (122) dans le logement extérieur (102) ; et
l'élément de fixation (104) étant en mesure de se déplacer par rapport au logement extérieur (102) entre une première position dans laquelle les éléments de mise en prise (124) se mettent en prise avec l'élément de fixation (104) et sont déplacés vers l'extérieur pour faire partiellement saillie au-delà de la surface tubulaire extérieure du logement extérieur (102) et la deuxième position dans laquelle les ouvertures (122) sont alignées sur les évidements (126) dans l'élément de fixation (104) pour permettre aux éléments de mise en prise (124) d'être reçus dans les évidements (126) et de se déplacer dans le sens radial vers l'intérieur ;
le raccord (100) comportant par ailleurs des moyens de sollicitation (130) qui sollicitent l'élément de fixation (104) vers la première position ;
l'élément de montage (136) comportant un passage traversant allongé ayant un évidement servant à des fins de réception libérable des éléments de mise en prise (124) du raccord de tête de traction (100).

2. Raccord de tête de traction (100) selon la revendication 1, dans lequel les éléments de mise en prise (124) comportent des billes.

3. Raccord de tête de traction (100) selon la revendication 2, dans lequel une première extrémité extérieure de chaque ouverture (122) a un diamètre inférieur au diamètre des billes.

4. Raccord de tête de traction (100) selon l'une quelconque des revendications précédentes, dans lequel le moyen de sollicitation (130) comporte une pluralité de moyens formant ressort.

5. Raccord de tête de traction (100) selon la revendication 4, dans lequel les moyens de sollicitation (130) comportent une pluralité de ressorts à gaz s'étendant entre le logement extérieur (102) et l'élément de fixation (104).

6. Raccord de tête de traction (100) selon la revendication 5, dans lequel les cylindres des ressorts à gaz sont montés dans des évidements correspondants (133) dans le logement extérieur (102) et les pistons des ressorts à gaz sont assujettis sur l'élément de fixation (104).

7. Raccord de tête de traction (100) selon la revendication 6, dans lequel les cylindres des ressorts à gaz sont alignés sur l'axe longitudinal du logement extérieur (102).

8. Raccord de tête de traction (100) selon l'une quelconque des revendications précédentes, dans lequel les évidements (126) dans la surface extérieure de la partie formant corps de l'élément de fixation (102) sont allongés.

9. Raccord de tête de traction (100) selon l'une quelconque des revendications précédentes, dans lequel les évidements (126) dans la surface extérieure de la partie formant corps de l'élément de fixation (102) comportent une partie inclinée par rapport à l'axe longitudinal.

10. Raccord de tête de traction (100) selon l'une quelconque des revendications précédentes, dans lequel les éléments de mise en prise (124) sont en mesure d'être reçus dans les évidements (126) de telle sorte qu'ils ne font pas saillie au-delà de la surface extérieure du logement extérieur (102).
